# EUROPEAN PATENT SPECIFICATION

(11) **EP 3 394 525 B1**
(45) Date of publication and mention of the grant of the patent: **06.04.2022**
(21) Application number: 15825732.9
(22) Date of filing: 21.12.2015
(51) Int. Cl.: F25B 21/00

(54) **ELECTROCALORIC HEAT TRANSFER SYSTEM WITH ELECTRICALLY CONDUCTIVE LIQUID**
ELEKTROKALORISCHES WÄRMEÜBERTRAGUNGSSYSTEM MIT ELEKTRISCH LEITFÄHIGER FLÜSSIGKEIT
SYSTÈME ÉLECTRO-CALORIQUE DE TRANSFERT DE CHALEUR À LIQUIDE ÉLECTROCONDUCTEUR

(43) Date of publication of application: 31.10.2018
(73) Proprietor: Carrier Corporation, Palm Beach Gardens, FL 33418 (US)
(72) Inventor: EASTMAN, Scott Alan, Glastonbury, Connecticut 06033 (US); KUCZEK, Andrzej E., Bristol, Connecticut 06010 (US); ANNAPRAGADA, Subramanyaravi, Shrewsbury, Massachusetts 01545 (US); MANTESE, Joseph V., Ellington, Connecticut 06029 (US); RANJAN, Ram, West Hartford, Connecticut 06117 (US); BLASKO, Vladimir, Avon, Connecticut 06001 (US); VERMA, Parmesh, South Windsor, Connecticut 06074 (US); JONSSON, Ulf J., South Windsor, Connecticut 06074 (US)
(74) Representative: Dehns
(86) International application number: PCT/US2015/067185
(87) International publication number: WO 2017/111918

(56) References cited:
- WO-A1-2015/156794
- US-A1- 2012 273 164
- None

## Description

### BACKGROUND

A wide variety of technologies exist for cooling applications, including but not limited to evaporative cooling, convective cooling, or solid state cooling such as electrothermic cooling. One of the most prevalent technologies in use for residential and commercial refrigeration and air conditioning is the vapor compression refrigerant heat transfer loop. These loops typically circulate a refrigerant having appropriate thermodynamic properties through a loop that comprises a compressor, a heat rejection heat exchanger (i.e., heat exchanger condenser), an expansion device and a heat absorption heat exchanger (i.e., heat exchanger evaporator). Vapor compression refrigerant loops effectively provide cooling and refrigeration in a variety of settings, and in some situations can be run in reverse as a heat pump. However, many of the refrigerants can present environmental hazards such as ozone depleting potential (ODP) or global warming potential (GWP), or can be toxic or flammable. Additionally, vapor compression refrigerant loops can be impractical or disadvantageous in environments lacking a ready source of power sufficient to drive the mechanical compressor in the refrigerant loop. For example, in an electric vehicle, the power demand of an air conditioning compressor can result in a significantly shortened vehicle battery life or driving range. Similarly, the weight and power requirements of the compressor can be problematic in various portable cooling applications.

Accordingly, there has been interest in developing cooling technologies as alternatives to vapor compression refrigerant loops. Various technologies have been proposed such as field-active heat or electric current-responsive heat transfer systems relying on materials such as electrocaloric materials, magnetocaloric materials, or thermoelectric materials. However, many proposals have been configured as bench-scale demonstrations with limited capabilities for scalability or mass production.

WO 2015/156794 discloses a heat pump element comprising a thin-film material and electrodes coupled to both sides of the thin-film material to form an electroded active thin-film material.

### BRIEF DESCRIPTION

According to an aspect of the invention, there is provided a heat transfer system as recited in claim 1.

In any of the foregoing embodiments, the heat transfer system comprises a plurality of said electrocaloric elements.

In any of the foregoing embodiments, the electrocaloric elements are disposed in a stack configuration.

In any of the foregoing embodiments, the heat transfer system further comprises a manifold for electrically conductive liquid in liquid communication with the plurality of electrocaloric elements.

In any of the foregoing embodiments, the heat transfer system further comprises one or more heat exchangers in liquid communication with the electrically conductive liquid.

In any of the foregoing embodiments, the one or more heat exchangers comprise electrically non-conductive conduits or conductive conduits having an electrically non-conductive layer.

In any of the foregoing embodiments, the conductive film electrode is configured as a live electrode, and the electrically conductive liquid is configured as a ground electrode.

In any of the foregoing embodiments, the conductive film electrode is embedded between adjacent electrocaloric elements.

In any of the foregoing embodiments, the conductive film electrode is disposed on a side of an electrocaloric film disposed outermost in a stack of electrocaloric elements.

In any of the foregoing embodiments, the conductive film electrode has a corrugated configuration.

In any of the foregoing embodiments, the conductive film electrode is configured as a live electrode, and the electrically conductive liquid is configured as a ground electrode.

In any of the foregoing embodiments, the conductive film electrode is configured as a ground electrode, and the electrically conductive liquid is configured as a live electrode.

In any of the foregoing embodiments, the heat transfer system comprises a conductive metal film electrode embedded between adjacent electrocaloric elements.

The heat transfer system any of claims 4 or 5 comprising a conductive metal film electrode on a side of an electrocaloric film disposed outermost in a stack of electrocaloric elements.

In any of the foregoing embodiments, the plurality of electrocaloric elements are arranged in an alternating order of polarity between adjacent electrocaloric elements.

In any of the foregoing embodiments, the heat transfer system further comprises an electrically conductive liquid leak detector comprising an electrical resistance or conductivity sensor.

In any of the foregoing embodiments, the electrically conductive liquid comprises an ionic liquid.

In any of the foregoing embodiments, the electrically conductive liquid comprises an aqueous electrolyte solution.

In any of the foregoing embodiments, the electrocaloric film comprises an electrocaloric polymer, liquid crystal polymer (LCP), electrocaloric ceramic or an electrocaloric polymer/ceramic composite.

In any of the foregoing embodiments, the electrocaloric element further comprises a barrier layer between the electrocaloric film and the electrically conductive liquid.

In any of the foregoing embodiments, a physical separation between adjacent electrocaloric elements is 1 µm to 100 mm.

In any of the foregoing embodiments, the electrocaloric elements have a thickness of 1 µm to 100 µm.

In any of the foregoing embodiments, the heat transfer system further comprises a first thermal flow path between the electrically conductive liquid and a heat sink, a second thermal flow path between the electrically conductive liquid and a heat source, and a controller configured to control electrical current to the electrodes and to selectively direct transfer of heat energy from the electrically conductive liquid in thermal communication with electrocaloric element to the heat sink along the first thermal flow path or from the heat source to the electrically conductive liquid in thermal communication with the electrocaloric element along the second thermal flow path.

According to another aspect of the invention an operating method is provided as recited in claim 13.

### BRIEF DESCRIPTION OF THE DRAWINGS

Subject matter of this invention is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic depiction of an embodiment of a heat transfer system according to the invention comprising electrocaloric elements in a stack configuration with two liquid electrodes of different polarities;
FIG. 2 is a schematic depiction of an alternate embodiment of a heat transfer system according to the invention comprising electrocaloric elements in a stack configuration with a common liquid electrode;
FIG. 3 is a schematic depiction of an example embodiment of an electrode and electrocaloric film configuration; and
FIG. 4 is a schematic depiction of an example embodiment of heat transfer system comprising an electrocaloric stack and other components.

### DETAILED DESCRIPTION

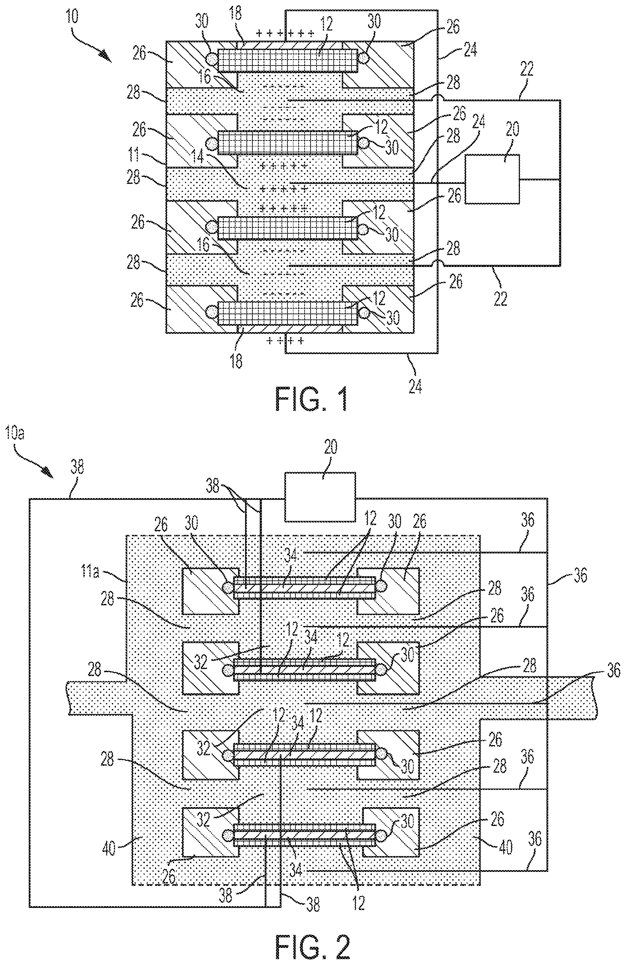

With reference now to the Figures, FIG. 1 schematically depicts a heat transfer system 10 according to an embodiment of the invention comprising a cross-section view of electrocaloric elements arranged in a stack 11. At the core of each electrocaloric element is an electrocaloric film 12. In some embodiments, electrocaloric film thickness can be in a range from having a lower limit of 0.1 µm, more specifically 0.5 µm, and even more specifically 1 µm. In some embodiments, the film thickness range can and having an upper limit of 1000 µm, more specifically 100 µm, and even more specifically 10 µm. It is understood that these upper and lower range limits can be independently combined to disclose a number of different possible ranges. Examples of electrocaloric materials for the electrocaloric film can include but are not limited to inorganic materials (e.g., ceramics), electrocaloric polymers, and polymer/ceramic composites. Examples of inorganics include but are not limited to PbTiO₃ ("PT"), Pb(Mg_{1/3}Nb_{2/3})O₃ ("PMN"), PMN-PT, LiTaO₃, barium strontium titanate (BST) or PZT (lead, zirconium, titanium, oxygen). Examples of electrocaloric polymers include, but are not limited to ferroelectric polymers, liquid crystal polymers, and liquid crystal elastomers.

Ferroelectric polymers are crystalline polymers, or polymers with a high degree of crystallinity, where the crystalline alignment of polymer chains into lamellae and/or spherulite structures can be modified by application of an electric field. Such characteristics can be provided by polar structures integrated into the polymer backbone or appended to the polymer backbone with a fixed orientation to the backbone. Examples of ferroelectric polymers include polyvinylidene fluoride (PVDF), polytriethylene fluoride, odd-numbered nylon, copolymers containing repeat units derived from vinylidene fluoride, and copolymers containing repeat units derived from triethylene fluoride. Polyvinylidene fluoride and copolymers containing repeat units derived from vinylidene fluoride have been widely studied for their ferroelectric and electrocaloric properties. Examples of vinylidene fluoride-containing copolymers include copolymers with methyl methacrylate, and copolymers with one or more halogenated co-monomers including but not limited to trifluoroethylene, tetrafluoroethylene, chlorotrifluoroethylene, trichloroethylene, vinylidene chloride, vinyl chloride, and other halogenated unsaturated monomers.

Liquid crystal polymers, or polymer liquid crystals comprise polymer molecules that include mesogenic groups. Mesogenic molecular structures are well-known, and are often described as rod-like or disk-like molecular structures having electron density orientations that produce a dipole moment in response to an external field such as an external electric field. Liquid crystal polymers typically comprise numerous mesogenic groups connected by non-mesogenic molecular structures. The non-mesogenic connecting structures and their connection, placement and spacing in the polymer molecule along with mesogenic structures are important in providing the fluid deformable response to the external field. Typically, the connecting structures provide stiffness low enough so that molecular realignment is induced by application of the external field, and high enough to provide the characteristics of a polymer when the external field is not applied.

In some exemplary embodiments, a liquid crystal polymer can have rod-like mesogenic structures in the polymer backbone separated by non-mesogenic spacer groups having flexibility to allow for re-ordering of the mesogenic groups in response to an external field. Such polymers are also known as main-chain liquid crystal polymers. In some exemplary embodiments, a liquid crystal polymer can have rod-like mesogenic structures attached as side groups attached to the polymer backbone. Such polymers are also known as side-chain liquid crystal polymers.

During operation, an electrocaloric effect is induced in the electrocaloric film 12 by application of an electric field between electrical conductors (i.e., electrodes) disposed on opposite sides of the electrocaloric film 12. As disclosed herein, one or both of the electric conductors on opposite sides of the electrocaloric film comprise an electrically conductive liquid. Any liquid having electrical conductivity that can impart an electric field to induce an electrocaloric effect in the electrocaloric film can be utilized. In some embodiments, the electrically conductive liquid can have a resistivity less than or equal to 500 µΩ·cm. In some embodiments, the electrically conductive liquid comprises an aqueous or non-aqueous solution of an electrolyte. Examples of electrolytes include but are not limited to aqueous solutions of inorganic salts (sodium chloride, calcium chloride, potassium nitrate, ammonium carbonate, etc.), organic salts (sodium acetate, monosodium glutamate, etc.), metal salts (silver chloride, copper chloride, copper sulfate, nickle chloride), polymer electrolytes (sulfonated polymers-polystyrene sulfonate as an example, sulfonic acid modified polymers-polystyrene sulfonic acid as an example, polyethylene imine, polyacrylic acid, ionomers (polymethacrylic acid and copolymers thereof, nafion and other perfluoro sulfonic acid polymers), ionic liquid modified polymers, ionic liquids, inorganic (sulfuric acid, hydrochloric acid, phosphoric acid) and organic acids (acetic acid, citric acid, sorbic acid), and bases (sodium hydroxide, potassium hydroxide, and combinations thereof. The concentration of aqueous electrolytes can vary widely depending on the characteristics of the electrolyte(s) dissolved in the solution. Non-aqueous solvents (e.g., polar organic solvents or in some cases non-polar organic solvents such as with ionic polymers that have solubility in non-polar organic solvents) can also be used, as well as mixtures of water-miscible organic solvents and water, as would be understood by the skilled person.

In some embodiments, the electrically conductive liquid can comprises an ionic liquid. An ionic liquid is defined as a salt that is in liquid form in the operating temperature range of the heat transfer system. Any ionic liquid having cations and anions that are sufficiently bulky and sufficiently delocalize their respective charges to reduce the melting point of the ionic liquid to within the operating range of the application can be used. The cation and anion would also be tailored such that it would be soluble in the desired solution if used in an electrolyte solution. If the ionic liquid is used, neat, then the cation and anion need not be tailored for solubility. Examples of ionic liquids include but are not limited to those disclosed in N. Khupse & N. Kumar, Ionic Liquids: New Materials with Wide Applications, Indian J. Chem., 49a, p. 635-48, May-June 2010.

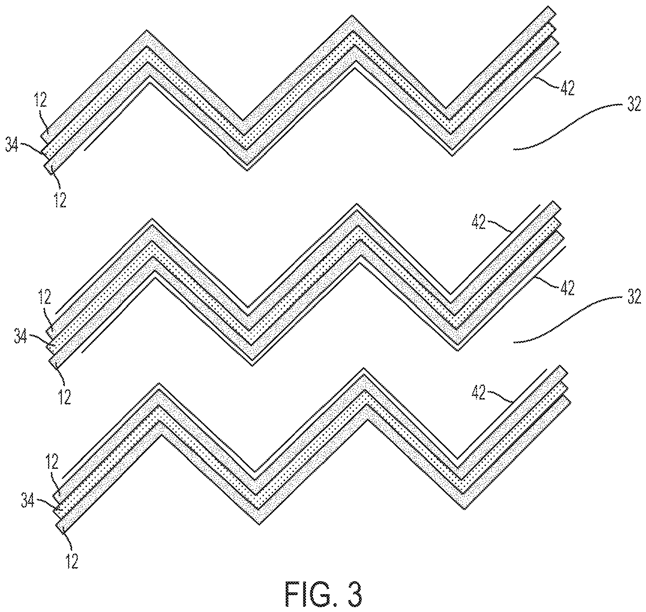

In some embodiments, the electrocaloric element can include a barrier layer (FIG. 3) between the electrocaloric film and the electrically conductive liquid against permeation (i.e., crossover, diffusion, or absorption) of the electrocaloric film by the electrically-conductive liquid. In some embodiments, a barrier layer can be 1 nanometer to 500 nm in thickness, and can include but are not limited to thin metallization layers or chemical vapor deposition coatings (CVD) such as poly(p-xylylene). In some embodiments, the barrier layer is electrically conductive; however, at thickness less than 500 nm electrical conductivity is not necessarily required.

Referring again to FIG. 1, electrically conductive liquids 14 and 16 are shown with different polarities. The different polarities are identified as positive (electrically conductive liquid 14) and negative (electrically conductive liquid 16) in FIG. 1, such as could be used with a direct current system, but could also be live and ground such as could be used with an alternating current system. In some embodiments, all electrodes in the stack can be electrically conductive liquids. However, leak prevention and mitigation is sometimes an issue, so in some embodiments the stack design is configured to reduce leak opportunities by keeping liquids toward the interior of the structure. Accordingly, in FIG. 1, conductive film electrodes 18 are disposed on the electrocaloric films 12 disposed outermost in the stack. Examples of materials for conductive film electrodes can include, but are not limited to, metallized layers of a conductive metal such as aluminum or copper, or other conductive materials such as carbon (e.g., carbon nanotubes, graphene, or other conductive carbon). Noble metals can also be used, but are not required. Other conductive materials such as a doped semiconductor, ceramic, or polymer, or conductive polymers can also be used.

As shown in FIG. 1, the electrocaloric elements are disposed in the stack in an alternating order of polarity between adjacent electrocaloric elements, with the electrocaloric film 12 shown at the top of the stack having a positive polarity electrode on top and a negative polarity electrode on the bottom. The next electrocaloric film 12 down in the stack has a reverse order of polarity with a negative electrode on top and a positive electrode on the bottom. This alternating order of polarity can then be repeated throughout the stack. Such a configuration provides separation of electrically conductive liquids of different polarities without the need for insulating separators, as the electrocaloric film itself serves as a separator. In some embodiments, spacing between adjacent electrocaloric elements can be in a range from having a lower limit of 1 µm, more specifically 10 µm, and even more specifically 50 µm. In some embodiments, the separation range can have an upper limit of 200 mm, more specifically 10 mm, even more specifically 2 mm. It is understood that these upper and lower range limits can be independently combined to disclose a number of different possible ranges.

With continued reference to FIG. 1, the electrodes comprising the electrically conductive liquid 16 are connected to one pole of electric power source 20 through electrical connections 22. The electrodes comprising the electrically conductive liquid 14 and the conductive film 18 are connected to another pole of electric power source 20 through electrical connections 24. Support elements 26 retain the electrocaloric films 12 and provide flow paths 28 for the electrically conductive liquids 14, 16. The support elements 26 can also cooperate to form a header space (not shown) for co-mingling of electrically conductive liquid of the same polarity from between different electrocaloric films 12. Electrically conductive loops 30 (e.g., metal wire loops) can be disposed around the periphery of each of the electrocaloric films for detection of leaks of electrically conductive fluids. Measurement of electrical resistance between the loops 30 and the electrically conductive liquids 14, 16 will typically yields an infinite resistance under normal conditions, but would yield a lower resistance in the event of a leak into the support elements 26 outside of the flow paths 28.

During operation, a controller (not shown) can selectively activate power source 20 to control electrical current to the electrodes and to selectively direct transfer of heat energy between the electrocaloric films 12 and the electrically conductive liquids 14, 16. The controller also selectively controls a flow of the electrically conductive liquids 14, 16 and one or more heat exchangers (not shown) where heat is transferred to a heat sink (not shown) or received from a heat source (also not shown). For electrically-charged liquids, the heat exchangers can contain separate electrically-isolated passes for liquids of different polarities, or each of the liquids 14 and 16 can be routed to separate heat exchangers. The heat exchangers can also be electrically isolated from outside contact to avoid short circuits. Electrical isolation can be provided by fabricating heat exchanger components in contact with the electrically conductive liquids 14, 16 (e.g., tubes) from electrically non-conductive materials (e.g., plastics) or by providing such components with an electrically non-conductive layer or coating. Further details of system operation are described below with respect to FIG. 3.

Another embodiment of the invention with stack 11a is schematically depicted in FIG. 2. As shown in FIG. 2, electrically conductive liquid electrodes 32 are disposed in an alternating configuration with electrically conductive film electrodes 34 between electrocaloric films 12. The electrically conductive liquid electrodes 32 are connected to power source 20 through electrical connections 36, and the electrically conductive film electrodes 34 are connected to the power source 20 through electrical connections 38. In some embodiments, such as shown in FIG. 2 the film electrodes 34 are at least partially embedded between the electrocaloric films 12 of adjacent electrocaloric elements, which can promote electrical isolation between the electrodes 32 and 34. In such embodiments, the electrode 34 serves as an electrode for two adjacent electrocaloric elements or, put another way, the two adjacent electrocaloric elements share a single electrode. The electrically conductive liquid electrodes 32 and the electrically conductive film electrodes 34 can be of different polarities such as in a direct current system, or either can be a live electrode and the other a ground electrode such as in an alternating current system. Although either of the electrodes 32 and 34 can be a live electrode and the other a ground electrode, in some embodiments, the embedded conductive film electrode 34 is a live electrode and the electrically conductive liquid electrode 32 is a ground electrode. Such a configuration can help reduce or avoid the need to electrically isolate the electrically conductive liquid in other parts of the system such as in heat exchangers. It should be noted that although FIG. 2 depicts sandwiches of two films 12 surrounding the embedded electrode 34, sandwiches of more than two films with embedded electrodes of alternating polarities are also contemplated. FIG. 2 also depicts header spaces 40 for co-mingling of the electrically conductive liquid 32 as it flows in and out of the flow paths 28.

The conductive film electrodes shown in FIGS. 1 and 2 are depicted as flat or planar; however, that is merely an example of an embodiment, and other configurations can be used. In another example of an embodiment as shown in FIG. 3, a conductive film electrode 34 has a corrugated configuration. As used herein, corrugated means a configuration with ridges and/or grooves, which can alternate in a regular pattern or can have any type of irregular pattern. The zig-zag pattern depicted in FIG. 3 is merely exemplary, and other corrugated patterns can be used, including but not limited to triangular, sinusoidal, regular or irregular waves, triangular, rhomboidal, notched, square or rectangular notched, or any sort of irregular rough pattern. FIG. 3 also depicts a barrier layer 42 between the electrocaloric film 12 and the electrically conductive liquid 32, as described hereinabove in greater detail.

In some embodiments, conductive liquid electrodes can avoid the need for an extra metallization process to deposit electrodes on electrocaloric films and/or help promote uniform charge across the electrodes and avoid parasitic or non-uniform electrical current that could adversely affect electrocaloric performance. Also liquid electrodes can in some embodiments provide hydrostatic pressure to promote maintenance of physical separation between adjacent films. Also, using an electrically conductive liquid both an electrode and a heat transfer working fluid can in some embodiments help promote good heat transfer efficiency.

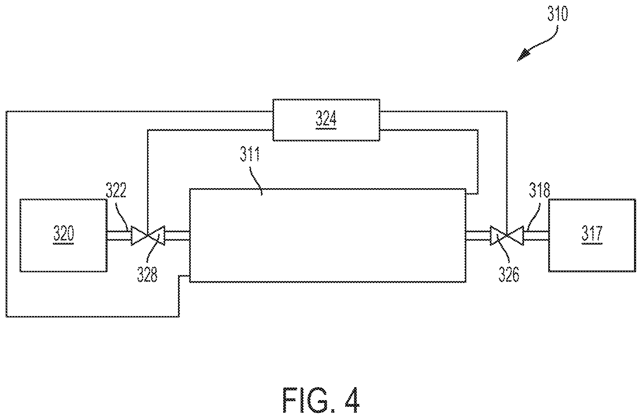

An example embodiment of a heat transfer system and its operation are further described with respect to FIG. 4. As shown in FIG. 4, a heat transfer system 310 comprises an electrocaloric stack 311 has one or more electrically conductive liquids in thermal communication with a heat sink 317 through a first thermal flow path 318, and in thermal communication with a heat source 320 through a second thermal flow path 322. A controller 324 is configured to control electrical current to through a power source (not shown) to selectively activate electrocaloric elements (not shown) in the stack 311. The controller 324 is also configured to open and close control valves 326 and 328 to selectively direct the electrically conductive liquid along the first and second flow paths 318 and 322.

In operation, the system 310 can be operated by the controller 324 applying an electric field as a voltage differential across the electrocaloric elements in the stack 311 to cause a decrease in entropy and a release of heat energy by the electrocaloric elements. The controller 324 opens the control valve 326 to transfer at least a portion of the released heat energy along flow path 318 to heat sink 317. This transfer of heat can occur after the temperature of the electrocaloric elements has risen to a threshold temperature. In some embodiments, heat transfer to the heat sink 317 is begun as soon as the temperature of the electrocaloric elements increases to be about equal to the temperature of the heat sink 317. After application of the electric field for a time to induce a desired release and transfer of heat energy from the electrocaloric elements to the heat sink 317, the electric field can be removed. Removal of the electric field causes an increase in entropy and a decrease in heat energy of the electrocaloric elements. This decrease in heat energy manifests as a reduction in temperature of the electrocaloric elements to a temperature below that of the heat source 320. The controller 324 closes control valve 326 to terminate flow along flow path 318, and opens control device 328 to transfer heat energy from the heat source 320 to the colder electrocaloric elements.

In some embodiments, for example where a heat transfer system is utilized to maintain a temperature in a conditioned space or thermal target, the electric field can be applied to the electrocaloric elements to increase its temperature until the temperature of the electrocaloric element reaches a first threshold. After the first temperature threshold, the controller 324 opens control valve 326 to transfer heat from the electrocaloric elements to the heat sink 317 until a second temperature threshold is reached. The electric field can continue to be applied during all or a portion of the time period between the first and second temperature thresholds, and is then removed to reduce the temperature of the electrocaloric elements until a third temperature threshold is reached. The controller 324 then closes control valve 326 to terminate heat flow transfer along heat flow path 318, and opens control valve 328 to transfer heat from the heat source 320 to the electrocaloric elements. The above steps can be optionally repeated until a target temperature of the conditioned space or thermal target (which can be either the heat source or the heat sink) is reached.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present invention is not to be seen as limited by the foregoing description, but is only limited by the scope of the appended claims.

## Claims

1. A heat transfer system, comprising
an electrocaloric element comprising an electrocaloric film (12), a first electrical conductor (14) on a first side of the electrocaloric film (12), and a second electrical conductor (16) on a second side of the electrocaloric film (12), wherein at least one of the first and second electrical conductors (14, 16) comprises an electrically conductive liquid;
an electric power source (20) in electrical contact with the first and second electrical conductors (14, 16), configured to provide an electrical field across the electrocaloric film (12); and
a liquid flow path (28) along the plurality of electrocaloric elements for the electrically conductive liquid;
wherein the first electrical conductor (14) comprises a first electrically conductive liquid and the second electrical conductor (16) comprises a second electrically conductive liquid electrically isolated from the first electrically conductive liquid; or
wherein the first electrical conductor (32) comprises an electrically conductive liquid and the second electrical conductor comprises a conductive film electrode (34).

2. The heat transfer system of claim 1, further comprising one or more heat exchangers in liquid communication with the electrically conductive liquid.

3. The heat transfer system of claim 2, wherein the one or more heat exchangers comprise electrically non-conductive conduits or conductive conduits having an electrically non-conductive layer.

4. The heat transfer system of claim 1, wherein the second electrical conductor comprises a conductive film electrode and the conductive film electrode (34) is configured as a live electrode, and the electrically conductive liquid (32) is configured as a ground electrode.

5. The heat transfer system of claims 1 or 4, wherein the second electrical conductor comprises a conductive film electrode and the conductive film electrode (34) is embedded between adjacent electrocaloric elements.

6. The heat transfer system any of claims 1, 4 or 5, wherein the second electrical conductor comprises a conductive film electrode and the conductive film electrode (34) is disposed on a side of an electrocaloric film (12) disposed outermost in a stack of electrocaloric elements.

7. The heat transfer system of any of claims 1-6, wherein the plurality of electrocaloric elements are arranged in an alternating order of polarity between adjacent electrocaloric elements.

8. The heat transfer system of any of claims 1-7, further comprising an electrically conductive liquid leak detector comprising an electrical resistance or conductivity sensor.

9. The heat transfer system of any of claims 1-8, wherein the electrically conductive liquid comprises an ionic liquid.

10. The heat transfer system of any of claims 1-9, wherein the electrically conductive liquid comprises an aqueous or non-aqueous electrolyte solution.

11. The heat transfer system of any of claims 1-10, wherein the electrocaloric element further comprises a barrier layer (42) between the electrically conductive film and the electrically conductive liquid.

12. The heat transfer system of any of claims 1-11, further comprising
a first thermal flow path (318) between the electrically conductive liquid and a heat sink (317)
a second thermal flow path (322) between the electrically conductive liquid and a heat source (320); and
a controller (324) configured to control electrical current to the electrodes and to selectively direct transfer of heat energy from the electrically conductive liquid in thermal communication with electrocaloric element to the heat sink (317) along the first thermal flow path (318) or from the heat source (320) to the electrically conductive liquid in thermal communication with the electrocaloric element along the second thermal flow path (322).

13. A method of operating the heat transfer system of any of claims 1-12, comprising applying an electric field to the first and second electrical conductors, and flowing the electrically conductive liquid or electrolytes between the liquid flow path along the plurality of electrocaloric elements and a heat source or heat sink.

## Patentansprüche

1. Wärmeübertragungssystem, umfassend
ein elektrokalorisches Element, umfassend eine elektrokalorische Schicht (12), einen ersten elektrischen Leiter (14) auf einer ersten Seite der elektrokalorischen Schicht (12) und einen zweiten elektrischen Leiter (16) auf einer zweiten Seite der elektrokalorischen Schicht (12), wobei zumindest einer von dem ersten und dem zweiten elektrischen Leiter (14, 16) eine elektrisch leitfähige Flüssigkeit umfasst;
eine Stromquelle (20) in elektrischem Kontakt mit dem ersten und dem zweiten elektrischen Leiter (14, 16), die zum Bereitstellen eines elektrischen Felds über die elektrokalorische Schicht (12) ausgelegt ist; und
einen Flüssigkeitsströmungsweg (28) entlang der Vielzahl elektrokalorischer Elemente für die elektrisch leitfähige Flüssigkeit;
wobei der erste elektrische Leiter (14) eine erste elektrisch leitfähige Flüssigkeit umfasst und der zweite elektrische Leiter (16) eine von der ersten elektrisch leitfähigen Flüssigkeit elektrisch isolierte zweite elektrisch leitfähige Flüssigkeit umfasst oder
wobei der erste elektrische Leiter (32) eine elektrisch leitfähige Flüssigkeit umfasst und der zweite elektrische Leiter eine Elektrode einer leitfähigen Schicht (34) umfasst.

2. Wärmeübertragungssystem nach Anspruch 1, weiter umfassend einen oder mehrere Wärmetauscher in Flüssigkeitskommunikation mit der elektrisch leitfähigen Flüssigkeit.

3. Wärmeübertragungssystem nach Anspruch 2, wobei der eine oder die mehreren Wärmetauscher elektrisch nichtleitfähige Leitungen oder leitfähige Leitungen mit einer elektrisch nichtleitfähigen Schicht umfassen.

4. Wärmeübertragungssystem nach Anspruch 1, wobei der zweite elektrische Leiter eine Elektrode einer leitfähigen Schicht umfasst und die Elektrode einer leitfähigen Schicht (34) als eine stromführende Elektrode und die elektrisch leitfähige Flüssigkeit (32) als eine Masseelektrode ausgelegt ist.

5. Wärmeübertragungssystem nach Ansprüche 1 oder 4, wobei der zweite elektrische Leiter eine Elektrode einer leitfähigen Schicht umfasst und die Elektrode einer leitfähigen Schicht (34) zwischen benachbarten elektrokalorischen Elementen eingebettet ist.

6. Wärmeübertragungssystem nach einem der Ansprüche 1, 4 oder 5, wobei der zweite elektrische Leiter eine Elektrode einer leitfähigen Schicht umfasst und die Elektrode einer leitfähigen Schicht (34) an einer Seite einer in einem Stapel elektrokalorischer Elemente am weitesten außen angeordneten elektrokalorischen Schicht (12) angeordnet ist.

7. Wärmeübertragungssystem nach einem der Ansprüche 1-6, wobei die Vielzahl elektrokalorischer Elemente in einer abwechselnden Polaritätsreihenfolge zwischen benachbarten elektrokalorischen Elementen angeordnet sind.

8. Wärmeübertragungssystem nach einem der Ansprüche 1-7, weiter umfassend einen Leckdetektor für die elektrisch leitfähige Flüssigkeit, umfassend einen Sensor für elektrischen Widerstand oder einen Leitfähigkeitssensor.

9. Wärmeübertragungssystem nach einem der Ansprüche 1-8, wobei die elektrisch leitfähige Flüssigkeit eine ionische Flüssigkeit umfasst.

10. Wärmeübertragungssystem nach einem der Ansprüche 1-9, wobei die elektrisch leitfähige Flüssigkeit eine wässrige oder eine nichtwässrige Elektrolytlösung umfasst.

11. Wärmeübertragungssystem nach einem der Ansprüche 1-10, wobei das elektrokalorische Element weiter eine Sperrschicht (42) zwischen der elektrisch leitfähigen Schicht und der elektrisch leitfähigen Flüssigkeit umfasst.

12. Wärmeübertragungssystem nach einem der Ansprüche 1-11, weiter umfassend
einen ersten Wärmeströmungsweg (318) zwischen der elektrisch leitfähigen Flüssigkeit und einer Wärmesenke (317),
einen zweiten Wärmeströmungsweg (322) zwischen der elektrisch leitfähigen Flüssigkeit und einer Wärmequelle (320) und
eine Steuereinheit (324), die zur Steuerung von elektrischem Strom zu den Elektroden und zur selektiven Direktübertragung von Wärmeenergie von der elektrisch leitfähigen Flüssigkeit in Wärmekommunikation mit einem elektrokalorischen Element zu der Wärmesenke (317) entlang des ersten Wärmeströmungswegs (318) oder von der Wärmequelle (320) zur elektrisch leitfähigen Flüssigkeit in Wärmekommunikation mit dem elektrokalorischen Element entlang des zweiten Wärmeströmungswegs (322) ausgelegt ist.

13. Verfahren zum Betreiben des Wärmeübertragungssystems nach einem der Ansprüche 1-12, umfassend ein Anlegen eines elektrischen Felds an den ersten und den zweiten elektrischen Leiter und ein Fließen der elektrisch leitfähigen Flüssigkeit oder Elektrolyte zwischen dem Flüssigkeitsströmungsweg entlang der Vielzahl elektrokalorischer Elemente und einer Wärmequelle oder einer Wärmesenke.

## Revendications

1. Système de transfert de chaleur, comprenant
un élément électrocalorique comprenant un film électrocalorique (12), un premier conducteur électrique (14) sur un premier côté du film électrocalorique (12), et un second conducteur électrique (16) sur un second côté du film électrocalorique (12), dans lequel au moins l'un des premier et second conducteurs électriques (14, 16) comprend un liquide électriquement conducteur ;
une source d'énergie électrique (20) en contact électrique avec les premier et second conducteurs électriques (14, 16), conçue pour fournir un champ électrique sur toute l'étendue du film électrocalorique (12) ; et
un trajet d'écoulement de liquide (28) le long de la pluralité d'éléments électrocaloriques pour le liquide électriquement conducteur ;
dans lequel le premier conducteur électrique (14) comprend un premier liquide électriquement conducteur et le second conducteur électrique (16) comprend un second liquide électriquement conducteur isolé du premier liquide électriquement conducteur ; ou
dans lequel le premier conducteur électrique (32) comprend un liquide électriquement conducteur et le second conducteur électrique comprend une électrode à film conducteur (34).

2. Système de transfert de chaleur selon la revendication 1, comprenant en outre un ou plusieurs échangeurs de chaleur en communication liquide avec le liquide électriquement conducteur.

3. Système de transfert de chaleur selon la revendication 2, dans lequel un ou plusieurs échangeurs de chaleur comprennent des conduits électriquement non conducteurs ou conducteurs présentant une couche électriquement non conductrice.

4. Système de transfert de chaleur selon la revendication 1, dans lequel le second conducteur électrique comprend une électrode à film conducteur et l'électrode à film conducteur (34) est conçue comme une électrode sous tension, et le liquide électriquement conducteur (32) est conçu comme une électrode de masse.

5. Système de transfert de chaleur selon la revendication 1 ou 4, dans lequel le second conducteur électrique comprend une électrode à film conducteur et l'électrode à film conducteur (34) est intégrée entre des éléments électrocaloriques adjacents.

6. Système de transfert de chaleur selon l'une quelconque des revendications 1, 4 ou 5, dans lequel le second conducteur électrique comprend une électrode à film conducteur et l'électrode à film conducteur (34) est disposée sur un côté d'un film électrocalorique (12) disposé le plus à l'extérieur dans un empilement d'éléments électrocaloriques.

7. Système de transfert de chaleur selon l'une quelconque des revendications 1-6, dans lequel la pluralité d'éléments électrocaloriques sont agencés selon un ordre de polarité alterné entre des éléments électrocaloriques adjacents.

8. Système de transfert de chaleur selon l'une quelconque des revendications 1-7, comprenant en outre un détecteur de fuite de liquide électriquement conducteur comprenant une résistance électrique ou un capteur de conductivité.

9. Système de transfert de chaleur selon l'une quelconque des revendications 1-8, dans lequel le liquide électriquement conducteur comprend un liquide ionique.

10. Système de transfert de chaleur selon l'une quelconque des revendications 1-9, dans lequel le liquide électriquement conducteur comprend une solution électrolytique aqueuse ou non aqueuse.

11. Système de transfert de chaleur selon l'une quelconque des revendications 1-10, dans lequel l'élément électrocalorique comprend en outre une couche barrière (42) entre le film électriquement conducteur et le liquide électriquement conducteur.

12. Système de transfert de chaleur selon l'une quelconque des revendications 1-11, comprenant en outre
un premier trajet d'écoulement thermique (318) entre le liquide électriquement conducteur et un dissipateur thermique (317)
un second trajet d'écoulement thermique (322) entre le liquide électriquement conducteur et une source de chaleur (320) ; et
un dispositif de commande (324) conçu commander le courant électrique vers les électrodes et pour diriger sélectivement le transfert d'énergie thermique du liquide électriquement conducteur en communication thermique avec l'élément électrocalorique au dissipateur thermique (317) le long du premier trajet d'écoulement thermique (318) ou de la source de chaleur (320) au liquide électriquement conducteur en communication thermique avec l'élément électrocalorique le long du second trajet d'écoulement thermique (322).

13. Procédé de fonctionnement du système de transfert de chaleur selon l'une quelconque des revendications 1-12, comprenant l'application d'un champ électrique aux premier et second conducteurs électriques, et l'écoulement du liquide électriquement conducteur ou des électrolytes entre le trajet d'écoulement de liquide le long de la pluralité d'éléments électrocaloriques et une source de chaleur ou un dissipateur thermique.
